## Europäisches Patentamt
## European Patent Office
## Office européen des brevets

(19)

(11) Veröffentlichungsnummer: **0 099 101**
**B1**

(12)

# EUROPÄISCHE PATENTSCHRIFT

(45) Veröffentlichungstag der Patentschrift:
28.10.87

(51) Int. Cl.⁴: **H 04 J 3/04**

(21) Anmeldenummer: **83106798.8**

(22) Anmeldetag: **11.07.83**

(54) Synchroner Takterzeuger für Digitalsignal-Multiplexgerät.

(30) Priorität: **13.07.82 DE 3226201**

(43) Veröffentlichungstag der Anmeldung:
**25.01.84 Patentblatt 84/4**

(45) Bekanntmachung des Hinweises auf die Patenterteilung:
**28.10.87 Patentblatt 87/44**

(84) Benannte Vertragsstaaten:
**AT BE CH DE FR GB IT LI NL SE**

(56) Entgegenhaltungen:
**DE - B - 2 419 853
US - A - 3 632 882**

**IBM TECHNICAL DISCLOSURE BULLETIN, Band 23, Nr. 6, November 1980, Seiten 2325-2326, New York, USA; D. SELLIER: "Programmable variable speed scanner"**

(73) Patentinhaber: **Siemens Aktiengesellschaft Berlin und München, Wittelsbacherplatz 2, D-8000 München 2 (DE)**

(72) Erfinder: **Magerl, Johann, Ing. grad.,
Sauerbruchstrasse 9, D-8000 München 70 (DE)**

## Beschreibung

Die Erfindung betrifft einen synchronen Takterzeuger für Digitalsignal-Multiplexgeräte mit einem ersten Zähler, dessen Zählperiode einer Blocklänge eines Pulsrahmens entspricht und der in eine vorgegebene Zählstellung einstellbar ist, mit einem vom ersten Zähler gesteuerten Blockzähler und mit einer Umschalteinrichtung zur Änderung der Zählperiode des ersten Zählers und/oder des Blockzählers, wobei die Umschalteinrichtung eine erste umschaltbare Gatterschaltung enthält, deren Eingänge an die Ausgänge des ersten Zählers angeschlossen sind und deren Ausgang an den Setzeingang des ersten Zählers geführt ist und dessen Zählperiode bestimmt.

In Digitalsignal-Multiplexern werden mehrere digitale Nachrichtenströme zu einem Multiplexsignal zusammengefasst. In das Multiplexsignal müssen bekannterweise zusätzliche Informationen, wie beispielsweise das Rahmenkennungswort, die Stopfkennbits sowie die Stopf- und Meldebits eingefügt werden. Zur Markierung dieser Zeitpunkte dienen Taktimpulse, die in Takterzeugern gewonnen werden. Auf der Empfangsseite muss das Multiplexsignal wiederum in mehrere Nachrichtenströme zerlegt werden, und die Zusatzinformationen müssen zeitlich richtig ausgewertet werden. Die auf der Sende- und Empfangsseite benötigten Takterzeuger einer bestimmten Multiplexerstufe unterscheiden sich nur geringfügig. Unterschiedliche Multiplexer für verschiedene Hierarchiestufen weisen dagegen unterschiedliche Pulsrahmen auf, die eine unterschiedliche Anzahl von Bits beinhalten. Die Pulsrahmen in verschiedenen Hierarchiestufen können sich sowohl in der Anzahl der übertragenen Blocks als auch in der Anzahl der übertragenen Bits pro Block oder in beidem unterscheiden. Bisher ist für jeden Multiplexer ein eigener Takterzeuger entwickelt worden.

In der US-PS 3 632 882 ist ein programmierbarer Taktteiler für ein Multiplexsystem mit unterschiedlichen Übertragungskapazitäten je Kanal beschrieben.

Der Taktteiler besteht aus zwei Zählern, die über unterschiedliche Matrizen programmiert werden können. Entsprechend der Übertragungskapazität wird von der zweiten Matrix die Anzahl der Zeitschlitze je Kanal festgelegt, während der ersten Zähler die Anzahl der Bits je Zeitschlitz bestimmt.

Über die Gewinnung von Arbeitstakten sind jedoch keine Angaben gemacht, da dieser Taktteiler nur in einem speziellen Multiplexgerät verwendet werden soll. Auch dürfte die asynchrone Ansteuerung des zweiten Zählers bei höheren Übertragungsgeschwindigkeiten besondere Massnahmen bei der Erzeugung der Arbeitstakte erforderlich machen.

In der DE-AS 2 419 853 ist eine Schaltungsanordnung zur Steuerung mehrerer Kanalschaltungen eines Zeitmultiplex-Datenübertragungssystems angegeben. Durch auf Steuerplatten befindliche Schalter sind hierbei die zur Steuerung erforderliche Zeitpunkte einstellbar.

Aufgabe der Erfindung ist es, einen in verschiedenen Multiplexern verwendbaren Takterzeuger anzugeben.

Ausgehend vom einleitend beschriebenen Stand der Technik, wird diese Aufgabe dadurch gelöst, dass der erste Zähler parallel Dateneingänge aufweist, dass den Dateneingängen eine Steuerlogikschaltung vorgeschaltet ist, deren Eingang ein Synchronisierimpuls zugeführt ist, der den ersten Zähler stets in dieselbe Zählstellung schaltet, dass der Ausgang der ersten umschaltbaren Gatterschaltung mit dem Eingang der Steuerlogikschaltung über ein erstes ODER-Glied verknüpft ist, dessen Ausgang mit dem Setzeingang des ersten Zählers verbunden ist, dass an die Ausgänge der Zähler eine Logikschaltung mit mehreren Ausgängen zur Erzeugung von Arbeitstakten angeschaltet ist und dass der Takterzeuger in unterschiedlichen Multiplexern verwendet wird und in der Logikschaltung die Arbeitstakte für unterschiedliche Multiplexerstufen herausgegattert werden.

Es ist zweckmässig nur einen einzigen umschaltbaren Takterzeuger zu entwickeln, der in mindestens zwei verschiedenen Hierarchiestufen oder Multiplexgeräten eingesetzt werden kann. Hierzu wird die Zählperiode mindestens eines Zählers geändert. Zweckmässigerweise wird ein Takterzeuger für ähnliche Pulsrahmen-Strukturen entworfen. Die Logikschaltung für Erzeugung von Arbeitstakten muss hierbei zwar Arbeitstakte für beide Hierarchiestufen erzeugen, diese werden jedoch sehr oft bei den gleichen Zählstellungen des Takterzeugers gewonnen. Dadurch, dass nur ein einziger Takterzeuger entwickelt werden muss, ergibt sich eine erhebliche Einsparung an Entwicklungskosten, obwohl der Takterzeuger geringfügig komplizierter ist.

Der erste Zähler wird als Binärzähler ausgebildet, dessen Zählperiode durch Rückstellung des Zählers bei einem vorgegebenem Zählerstand bestimmt wird. Durch die erste umschaltbare Gatterschaltung werden unterschiedliche Zählerstände herausgegattert und dadurch unterschiedliche Zählperioden eingestellt.

Der erste Zähler wird ausserdem bei verschiedenen Zählperioden stets in dieselbe Anfangsstellung zurückgeschaltet. Hierdurch vereinfacht sich die Logikschaltung zur Erzeugung der Arbeitstakte, da diese hauptsächlich zu Beginn jedes Blokkes eines Pulsrahmens benötigt werden. Bei Empfang eines Rahmenkennungswortes muss der Takterzeuger dagegen in eine andere Zählstellung gesetzt werden. Dies geschieht mit Hilfe der Steuerlogikschaltung. Aufgrund der Zeitbedingungen der verwendeten Takte kann es zweckmässig sein, den ersten Zähler dabei in eine Zählstellung zu setzen, die je nach Laufzeit der Schaltung einem der nächsten Bits nach dem Empfang des Rahmenkennungswortes entspricht.

Es ist zweckmässig, dass als Umschalteinrichtung für die Zählperiode des Blockzählers eine zweite umschaltbare Gatterschaltung vorgesehen

ist, deren Eingänge an die Ausgänge des Blockzählers angeschlossen sind und deren Ausgang mit dem Eingang der Steuerlogikschaltung über ein zweites ODER-Glied verknüpft ist, dessen Ausgang mit dem Setzeingang des Blockzählers verbunden ist.

Es ist zweckmässig, die Umschalteinrichtung für den Blockzähler in derselben Weise auszuführen wie beim ersten Zähler. Der Blockzähler benötigt keine Steuerlogikschaltung, da er von einem empfangenen Rahmenkennungswort in dieselbe Zählstellung geschaltet wird wie beim üblichen Rückstellen nach Beendigung der Zählperiode.

Es ist zweckmässig, dass eine erste Gatterschaltung mit zwei Ausgängen vorgesehen ist, deren erster Ausgang auf den Setzeingang des ersten Zählers geführt ist und deren zweiter Ausgang mit dem Übertragseingang des Blockzählers verbunden ist.

Hierdurch wird erreicht, dass der Blockzähler zu einem anderen Zeitpunkt als der erste Zähler getaktet wird. Die Ausgänge des Blockzählers werden hierdurch zeitlich unkritisch für die Herausgatterung des ersten Bits eines jeden Blockes.

Vorteilhafte Weiterbildungen der Erfindung sind in den übrigen Unteransprüchen angegeben.

Ein Ausführungsbeispiel der Erfindung wird anhand von Prinzipschaltbildern und Zeitdiagrammen näher erläutert.

Es zeigen

Fig. 1 ein Prinzipschaltbild des Takterzeugers,

Fig. 2 ein Ausführungsbeispiel des Takterzeugers,

Fig. 3 einen Pulsrahmen für das Multiplexsystem 34/140 und

Fig. 4 einen Multiplexrahmen für das Multiplexsystem 140/565.

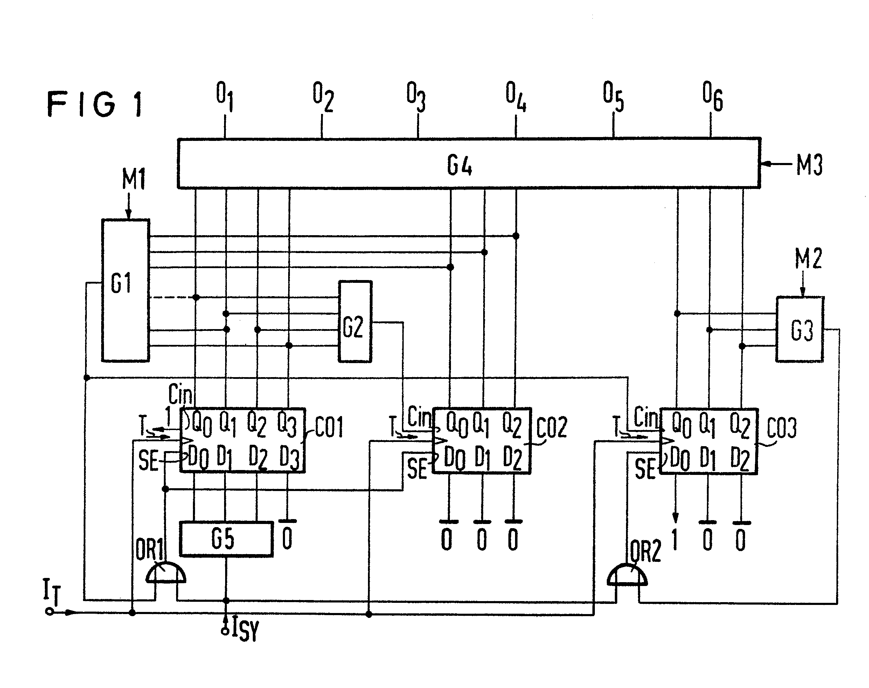

Der in Fig. 1 dargestellte Takterzeuger enthält drei Binärzähler C01, C02 und C03. Über einen Takteingang $I_T$ wird den Binärzählern der Bit-Arbeitstakt T zugeführt. Die Ausgänge der einzelnen Kippstufen der Zähler C01 bis C03 sind mit einer Logikschaltung G4 zur Erzeugung von Arbeitstakten verbunden, die an den Ausgängen $O_1$ bis $O_6$ der Logikschaltung G4 abgegeben werden. Während der Übertragseingang $C_{in}$ des ersten Binärzählers C01 an der logischen 1 liegt, ist der Übertragseingang $C_{in}$ des zweiten Binärzählers C02 mit dem Ausgang einer zweiten Gatterschaltung G2 verbunden, deren Eingänge an die Ausgänge $Q_0$ bis $Q_3$ des ersten Binärzählers C01 angeschlossen sind. Der Übertragseingang wird hier als aktiviert angenommen, wenn eine logische 1 anliegt. Bei vielen Zählerbausteinen ist statt der logischen 1 die logische 0 am Übertragseingang zur Aktivierung erforderlich. Dies ist bei der Realisierung der Schaltung selbstverständlich zu berücksichtigen. Eine erste umschaltbare Gatterschaltung G1 ist ebenfalls an die Ausgänge des ersten Binärzählers und an die Ausgänge $Q_0$ bis $Q_2$ des zweiten Binärzählers angeschlossen. Es ist abhängig von der herauszugatterenden Bitkombination nicht unbedingt notwendig, alle Anschlüsse vorzusehen. Dies ist durch eine gestrichelte Verbindung und eine fortgelassene Verbindung zwischen Eingängen der ersten umschaltbaren Gatterschaltung G1 und den Ausgängen des ersten und des zweiten Binärzählers angedeutet. Der Ausgang der ersten umschaltbaren Gatterschaltung G1 ist über ein erstes ODER-Glied OR1 mit den Setzeingängen SE des ersten und des zweiten Binärzählers C01, C02 verbunden. Ausserdem ist der Ausgang der ersten umschaltbaren Gatterschaltung noch mit dem Übertragseingang $C_{in}$ des Blockzählers C03 verbunden. Die Ausgänge $Q_0$ bis $Q_2$ des Blockzählers sind über eine zweite umschaltbare Gatterschaltung G3 und über ein zweites ODER-Gatter OR2 auf den Setzeingang SE des Blockzählers C03 zurückgeführt. Den ersten drei Dateneingängen $D_0$ bis $D_2$ des ersten Binärzählers C01 ist eine Steuerlogikschaltung G5 vorgeschaltet. Deren Eingang $I_{SY}$ wird ein Synchronisierimpuls von einer nicht dargestellten Synchronisiereinrichtung zugeführt. Der Eingang der Steuerlogikschaltung G5 ist ausserdem mit jeweils dem zweiten Eingang des ersten und des zweiten ODER-Gliedes OR1 und OR2 verbunden. Die übrigen Dateneingänge der Zähler liegen mit Ausnahme des ersten Dateneinganges $D_0$ des Blockzählers auf der logischen 0. Die umschaltbaren Gatterschaltungen G1 und G3 sind mit Umschalteingängen M1 bzw. M2 versehen. Ein weiterer Umschalteingang M3 greift in die Logikschaltung G4 ein. Die Logikschaltung G4 enthält im wesentlichen Gatterschaltungen, mit deren Hilfe bestimmte Zählerstellungen herausgegattert werden. Die Arbeitstakte werden im allgemeinen über Kippstufen geführt, um sie von Störimpulsen zu befreien.

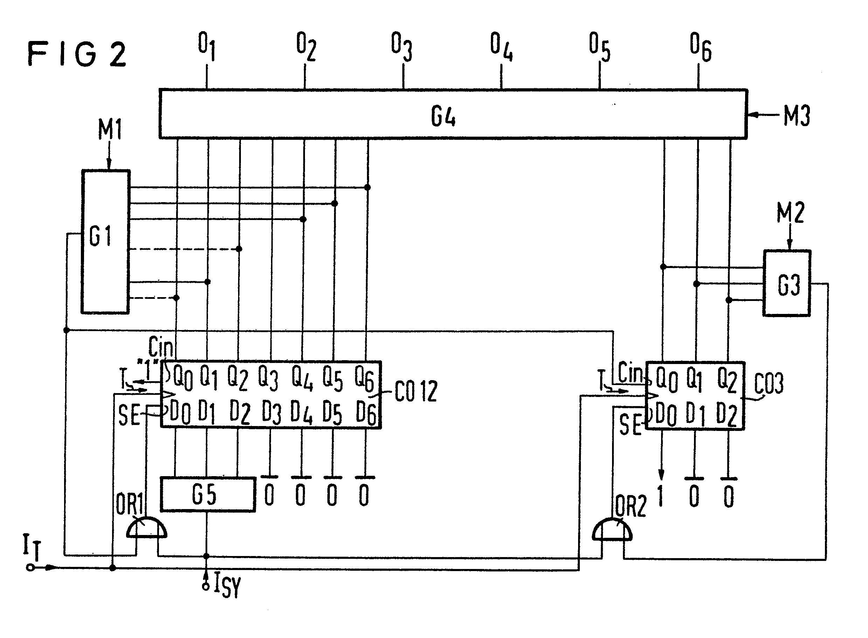

In Fig. 2 ist ein Ausführungsbeispiel des Takterzeugers dargestellt. Dieser stimmt im wesentlichen mit dem in Fig. 1 dargestellten Takterzeuger überein, die beiden Binärzähler C01 und C02 sind durch einen ersten Zähler C012 ersetzt. Der Rücksetzvorgang der verwendeten Zähler erfolgt synchron mit dem Bit-Arbeitstakt.

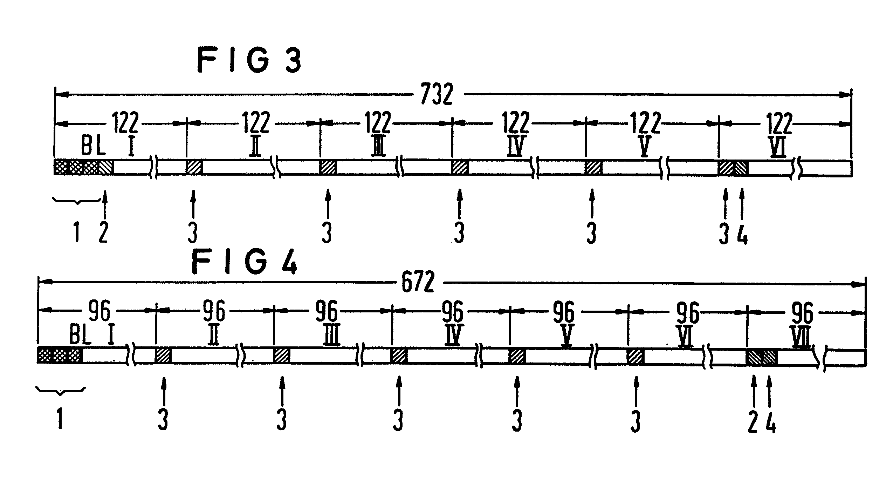

Der in Fig. 2 dargestellte Takterzeuger soll beispielsweise für die Multiplexgeräte 34/140 und 140/565 umschaltbar sein. Die Pulsrahmen dieser Multiplexerstufen sind in Fig. 3 und in Fig. 4 dargestellt. Hierbei handelt es sich jeweils um den auf einen Datenstrom der niedrigen Bitrate bezogenen Rahmen. Jeweils vier dieser Datenströme werden zu einem Multiplexsignal zusammengesetzt. Auf der Empfangsseite wird das empfangene Multiplexsignal in vier Datenströme aufgeteilt, die dem dargestellten Pulsrahmen entsprechen. Der empfangsseitig abgegebene Datenstrom ist wieder kontinuierlich. Der in Fig. 3 dargestellte Pulsrahmen umfasst 732 Bits. Diese sind aufgeteilt in 6 Blöcke I bis VI mit jeweils 122 Bits. Mit 1 ist das anteilige Rahmenkennungswort (3 Bits) gekennzeichnet, 2 kennzeichnet ein Bit des Meldewortes, mit 3 sind die Stopfkennbits gekennzeichnet und 4 stellt das Stopfbit dar.

Der in Fig. 4 dargestellte Pulsrahmen umfasst dagegen 672 Bits, aufgeteilt in 7 Blöcke mit je 96 Bits. Die Positionen der zusätzlich übertragenen Information bleiben, vom Meldewort abgesehen, innerhalb der einzelnen Blöcke erhalten.

In der Logikschaltung ist bei diesen beiden Multiplexsystemen nur ein geringer zusätzlicher Aufwand erforderlich, um alle Arbeitstakte herauszugattern. Die einzelnen Blocklängen werden durch den ersten Zähler C012 zusammen mit der ersten umschaltbaren Gatterschaltung G1 erzeugt. Durch die Gatterschaltung G1 wird beispielsweise der Zählerstand 121 herausgegattert und der Zähler über seinen Setzeingang SE mit dem nächsten Bit-Arbeitstakt in den Zählerstand 0 gesetzt. Der erste Zähler C012 erreicht damit eine Zählperiode von 122. Gegen Ende eines jeden Blockes wird der Übertragseingang $C_{in}$ des Blockzählers C03 aktiviert. Der Blockzähler schaltet deshalb mit dem nächsten Arbeitstakt um eine Zählerstellung weiter und kennzeichnet dadurch den nächsten Block. Die Rücksetzung des Blockzählers erfolgt über die zweite umschaltbare Gatterschaltung G3. Es wird der Zählerstand 6 herausgegattert und der Blockzähler mit dem nächsten Bit-Arbeitstakt T, der mit einer logischen 1 am Übertragseingang zusammenfällt, in seine Zählerstellung 1 zurückgesetzt, so dass eine Zählperiode 6 Blöcke umfasst. Hierdurch ist der Pulsrahmen nach Fig. 3 erzeugt. Bei der verwendeten Schaltkreistechnik wird der Arbeitstakt auch für den Rücksetzvorgang des Blockzählers nur wirksam, wenn der Übertragseingang $C_{in}$ eine logische 1 aufweist.

Bei anderen Schaltungstechniken ist die Beschaltung entsprechend zu variieren. Die Rückstellung des Blockzählers kann ebenso in die Zählerstellung 0 erfolgen, wenn durch die zweite umschaltbare Gatterschaltung G3 die entsprechenden Zustände herausgegattert werden.

Die erste umschaltbare Gatterschaltung G1 kann mit zwei Ausgängen so ausgeführt werden, dass der Blockzähler bereits ein oder mehrere Bits früher getaktet wird. Hierdurch ändern sich seine Ausgänge zeitlich unkritisch.

Zur Erzeugung des Pulsrahmens nach Fig. 4 wird die erste umschaltbare Gatterschaltung G1 so umgeschaltet, dass der Zählerstand 95 herausgegattert wird. Bei dem Blockzähler C03 wird durch die zweite umschaltbare Gatterschaltung G3 der Zählerstand 7 herausgegattert und dadurch seine Zählperiode ebenfalls auf 7 erhöht. Die benötigten Arbeitstakte werden an den Ausgängen $0_1$ bis $0_6$ der Logikschaltung G3 abgegeben. Ein das Meldewort kennzeichnender Impuls kann beispielsweise am Ausgang $0_5$ der Logikschaltung G4 abgegeben werden. Soll dagegen der Impulsrahmen nach Fig. 4 erzeugt werden, so kann ein das Meldewort kennzeichnender Arbeitstakt am Ausgang $0_6$ abgegeben werden. Es ist ebenso denkbar, durch Umschalten am Umschalteingang M3 der Logikschaltung G4 an den Ausgängen $0_1$ bis $0_6$ Arbeitstakte abzugeben, die denselben Bits, z.B. Bit 2 des Meldewortes immer dem Ausgang $0_5$, zugeordnet sind.

Bei Empfang eines Synchronwortes, dies liegt vollständig nach dem dritten Bit jedes auf die niedrigere Bitrate bezogenen Pulsrahmens vor, muss der Takterzeuger bei Betriebsaufnahme oder nach dem Verlust des Rahmensynchronismus erneut eingestellt werden. Dies geschieht über die Steuerlogikschaltung G5 und die beiden ODER-Glieder OR1 und OR2. Ein Synchronimpuls am Eingang $I_{SY}$ legt an die Dateneingänge des ersten Zählers C02 z.B. eine 4 (0100 binär) an und aktiviert die Setzeingänge SE des ersten Zählers C012 und des Blockzählers C03. Mit dem nächsten Arbeitstakt wird deshalb der erste Zähler in die Zählstellung 4 geschaltet und der Blockzähler in die Zählstellung 1. Hierdurch ist der Takterzeuger synchronisiert.

Je nach Laufzeit der verwendeten Bauteile kann es notwendig sein, den ersten Zähler zu einem späteren Zeitpunkt durch den Synchronismus in die Zählstellung 5 oder 6 zurückzustellen.

**Patentansprüche**

1. Synchroner Takterzeuger für Digitalsignal-Multiplexgeräte mit einem ersten Zähler (C012), dessen Zählperiode einer Blocklänge eines Pulsrahmens entspricht und der in eine vorgegebene Zählstellung einstellbar ist, mit einem vom ersten Zähler (C012) gesteuerten Blockzähler (C03) und mit einer Umschalteinrichtung zur Änderung der Zählperiode des ersten Zählers (C012) und/oder des Blockzählers (C03), wobei die Umschalteinrichtung eine erste umschaltbare Gatterschaltung (G1) enthält, deren Eingänge an die Ausgänge (Q0, Q1, Q2 . . .) des ersten Zählers (C012) angeschlossen sind und deren Ausgang an den Setzeingang (SE) des ersten Zählers (C012) geführt ist und dessen Zahlperiode bestimmt, dadurch gekennzeichnet, dass der erste Zähler (C012) parallel Dateneingänge ($D_0$, $D_1$, $D_2$, . . .) aufweist, dass den Dateneingängen ($D_0$, $D_1$, $D_2$, . . .) eine Steuerlogikschaltung (G5) vorgeschaltet ist, deren Eingang ($I_{SY}$) ein Synchronisierimpuls zugeführt ist, der den ersten Zähler stets in dieselbe Zählstellung schaltet, dass der Ausgang der ersten umschaltbaren Gatterschaltung (G1) mit dem Eingang ($I_{SY}$) der Steuerlogikschaltung (G5) über ein erstes ODER-Glied verknüpft ist, dessen Ausgang mit dem Setzeingang (SE) des ersten Zählers (C012) verbunden ist, dass an die Ausgänge ($Q_0$, $Q_1$, $Q_2$, . . .) der Zähler (C012, C03) eine Logikschaltung (G4) mit mehreren Ausgängen ($0_1$, $0_2$, $0_3$, . . .) zur Erzeugung von Arbeitstakten angeschaltet ist, und dass der Takterzeuger in unterschiedlichen Multiplexern verwendet wird und in der Logikschaltung (4) die Arbeitstakte für unterschiedliche Multiplexerstufen herausgegattert werden.

2. Synchroner Takterzeuger nach Anspruch 1, dadurch gekennzeichnet, dass als Umschalteinrichtung für die Zählperiode des Blockzählers (C03) eine zweite umschaltbare Gatterschaltung (G3) vorgesehen ist, deren Eingänge an die Ausgänge ($Q_0$, $Q_1$, $Q_2$) des Blockzählers (C03) angeschlossen sind und deren Ausgang mit dem Eingang ($I_{S4}$) der Steuerlogikschaltung (G5) über ein zweites ODER-Glied (OR2) verknüpft ist, dessen Ausgang mit dem Setzeingang (SE) des Blockzählers verbunden ist.

3. Synchroner Takterzeuger nach Anspruch 1 oder 2, dadurch gekennzeichnet, dass für den ersten Binärzähler (C012) und/oder für den Blockzähler (C03) jeweils ein synchron einstellbarer Binärzähler vorgesehen ist.

4. Synchroner Takterzeuger nach einem der vorhergehenden Ansprüche, dadurch gekennzeichnet, dass der Ausgang der ersten umschaltbaren Gatterschaltung (G1) mit dem Übertragsein-gang ($C_{in}$, «carry in») des Blockzählers verbunden ist.

5. Synchroner Takterzeuger nach einem der vorhergehenden Ansprüche, dadurch gekennzeichnet, dass die Logikschaltung (G4) zur Erzeugung der Arbeitstakte in Abhängigkeit von der Multiplexerstufe umschaltbar ist.

6. Synchroner Takterzeuger nach einem der vorhergehenden Ansprüche, dadurch gekennzeichnet, dass eine erste Gatterschaltung (G1) mit zwei Ausgängen vorgesehen ist, deren erster Ausgang auf den Setzeingang des ersten Zählers (C012) geführt ist und deren zweiter Ausgang mit dem Übertragseingang des Blockzählers (C03) verbunden ist.

**Claims**

1. A synchronous clock generator for digital signal multiplex devices comprising a first counter (C012) whose counting period corresponds to one block length of a pulse frame and which can be set in a predetermined counting position, comprising a block counter (C03) which is controlled by the first counter (C012), and comprising a switch-over device which changes the counting period of the first counter (C012) and/or of the block counter (C03), where the switch-over device includes a first switchable gate circuit (G1) whose inputs are connected to the outputs (Q0, Q1, Q2, . . .) of the first counter (C012), and whose output leads to the setting input (SE) of the first counter (C012) and determines the counting periods thereof, characterised in that the first counter (C012) has parallel data inputs ($D_0, D_1, D_2, . . .$), that the data inputs ($D_0, D_1, D_2, . . .$) are preceded by a control logic circuit (G5) whose input ($I_{SY}$) is supplied with a synchronising pulse which always switches the first counter into the same counting position, that the output of the first switchable gate circuit (G1) is logic-linked to the input ($I_{SY}$) of the control logic circuit (G5) via a first OR-gate whose output is connected to the setting input (SE) of the first counter (C012), that the outputs ($Q_0, Q_1, Q_2, . . .$) of the counters (C012, C03) are connected to a logic circuit (G4) which has a plurality of outputs ($0_1, 0_2, 0_3, . . .$) and which serves to produce operating clock signals, and that the clock generator is used in different multiplexers and the operating clock signals for different multiplexer stages are gated out in the logic circuit (4).

2. A synchronous clock generator as claimed in claim 1, characterised in that the switch-over device for the counting period of the block counter (C03) comprises a second switchable gate circuit (G3) whose inputs are connected to the outputs ($Q_0, Q_1, Q_2$) of the block counter (C03) and whose output is logic-linked to the input ($I_{S4}$) of the control logic circuit (G5) via a second OR-gate (OR2) whose output is connected to the setting input (SE) of the block counter.

3. A synchronous clock generator as claimed in claim 1 or claim 2, characterised in that a synchronously adjustable binary counter is provided for the first binary counter (C012) and/or for the block counter (C03).

4. A synchronous clock generator as claimed in one of the preceding claims, characterised in that the output of the first switchable gate circuit (G1) is connected to the carry input ($C_{in}$, carry in) of the block counter.

5. A synchronous clock generator as claimed in one of the preceding claims, characterised in that the logic circuit (G4) which serves to generate operating clock signals can be switched-over in dependence upon the multiplexer stage.

6. A synchronous clock generator as claimed in one of the preceding claims, characterised in that a first gate circuit (G1) having two outputs is provided, the first output of which leads to the setting input of the first counter (C012) and the second output of which is connected to the carry input of the block counter (C03).

**Revendications**

1. Générateur synchrone de cadence pour des appareils de multiplexage de signaux numériques, comportant un premier compteur (C012), dont la période de comptage correspond à une longueur de bloc d'une trame d'impulsions et qui est réglable dans une position de comptage prédéterminée, un compteur de blocs (C03) commandé par le premier compteur (C012), et un dispositif de commutation pour modifier la période de comptage du premier compteur (C012) et/ou du compteur de blocs (C03), le dispositif de commutation contenant un premier circuit de porte (G1) commutable, dont les entrées sont raccordées aux sorties (Q0, Q1, Q2, . . .) du premier compteur (C012) et dont la sortie est reliée à l'entrée de positionnement (SE) du premier compteur (C012) et détermine la période de comptage de ce compteur, caractérisé par le fait que le premier compteur (C012) comporte des entrées parallèles de données ($D_0, D_1, D_2, . . .$), qu'en amont des entrées de données ($D_0, D_1, D_2, . . .$) se trouve branché un circuit logique de commande (G5), à l'entrée ($I_{SY}$) duquel est envoyée une impulsion de synchronisation, qui place toujours le premier compteur dans la même position de comptage, que la sortie du premier circuit de porte commutable (G1) est combinée à l'entrée ($I_{SY}$) du circuit logique de commande (G5) par l'intermédiaire d'un premier circuit OU, dont la sortie est reliée à l'entrée de positionnement (SE) du premier compteur (C012), qu'un circuit logique (G4) comportant plusieurs sorties ($0_1, 0^2, 0_3 . .$) pour produire des cadences de travail est raccordé aux sorties ($Q_0, Q_1, Q_2 . . .$) des compteurs (C012, C03), et que le générateur de cadence est utilisé dans différents multiplexeurs et que les cadences de travail pour différents étages de multiplexeurs sont extraites au moyen de portes dans le circuit logique (4).

2. Générateur de cadence synchrone suivant la revendication 1, caractérisé par le fait qu'on utilise comme dispositif de commutation pour le comptage du compteur de blocs (C03), un second circuit de porte commutable (G3), dont les entrées sont raccordées aux sorties ($Q_0$, $Q_1$, $Q_2$) du compteur de blocs (C03) et dont la sortie est combinée à l'entrée ($I_{S4}$) du circuit logique de commande (G5) par l'intermédiaire d'un second circuit OU (OR2) dont la sortie est reliée à l'entrée de positionnement (SE) du compteur de blocs.

3. Générateur synchrone de cadence suivant la revendication 1 ou 2, caractérisé par le fait qu'il est prévu respectivement un compteur binaire réglable de façon synchrone pour le premier compteur binaire (C012) et/ou pour le compteur de blocs (C03).

4. Générateur synchrone de cadence suivant l'une des revendications précédentes, caractérisé par le fait que la sortie du premier circuit de porte commutable (G1) est reliée à l'entrée de report ($C_{in}$, «carry in») du compteur de blocs.

5. Générateur synchrone de cadence suivant l'une des revendications précédentes, caractérisé par le fait que le circuit logique (G4) servant à produire les impulsions de cadence de travail est commutable en fonction de l'étage du multiplexeur.

6. Générateur synchrone de cadence suivant l'une des revendications précédentes, caractérisé par le fait qu'il est prévu un premier circuit de porte (G1) comportant deux sorties, dont la première est reliée à l'entrée de positionnement du premier compteur (C012) et dont la seconde est reliée à l'entrée de report du compteur de blocs (C03).

FIG 1

FIG 2

0 099 101

11

# FIG 3

732

122    122    122    122    122    122

BL I    II    III    IV    V    VI

1 2    3    3    3    3    3 4

# FIG 4

672

96    96    96    96    96    96    96

BL I    II    III    IV    V    VI    VII

1    3    3    3    3    3    2 4